(19) Europäisches Patentamt
European Patent Office
Office européen des brevets

(11) Veröffentlichungsnummer: **0 271 818 B1**

# (12) EUROPÄISCHE PATENTSCHRIFT

(45) Veröffentlichungstag der Patentschrift: **15.07.92**

(51) Int. Cl.[5]: **C09B 57/04**, C09D 7/12, C08K 5/34

(21) Anmeldenummer: **87118202.8**

(22) Anmeldetag: **09.12.87**

## (54) Isoindolin-Metallkomplexe.

(30) Priorität: **16.12.86 DE 3642856**

(43) Veröffentlichungstag der Anmeldung:
**22.06.88 Patentblatt 88/25**

(45) Bekanntmachung des Hinweises auf die Patenterteilung:
**15.07.92 Patentblatt 92/29**

(84) Benannte Vertragsstaaten:
**CH DE FR GB IT LI**

(56) Entgegenhaltungen:
**EP-A- 0 172 512**
**EP-A- 0 224 687**
**FR-A- 2 207 173**
**FR-A- 2 379 841**

(73) Patentinhaber: **BASF Aktiengesellschaft**
**Carl-Bosch-Strasse 38**
**W-6700 Ludwigshafen(DE)**

(72) Erfinder: **Radtke, Volker, Dr.**
**Barbarossastrasse 4**
**W-6733 Hassloch(DE)**
Erfinder: **Kowarsch, Heinrich, Dr.**
**Kuernbacher Strasse 34**
**W-7519 Oberderdingen(DE)**
Erfinder: **Hahn, Erwin, Dr.**
**Am Buechsenackerhang 31**
**W-6900 Heidelberg(DE)**

EP 0 271 818 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In der US-A-4 191 566 wird die Umsetzung der Kondensationsprodukte aus 2-Cyanmethylbenzimidazol oder 2-Aminobenzimidazol und 1-Amino-3-iminoisoindolin mit wasserfreiem Nickelacetat in Gegenwart von Diethylenglykolmonoethylether bei 140 bis 145 °C zu schwarzen Komplexen der Formel (II)

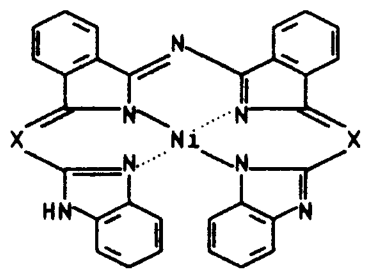

(II)

beschrieben, in der beide X für =N- oder

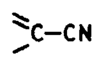

stehen.

Die Verbindungen sind für die Verwendung in elektrophotographischen Systemen bestimmt. Aufgrund ihres Farbtons sind diese Metallkomplexe für eine coloristische Anwendung ohne Interesse.

Die vorliegende Erfindung betrifft Isoindolin-Metallkomplexe der Formel I

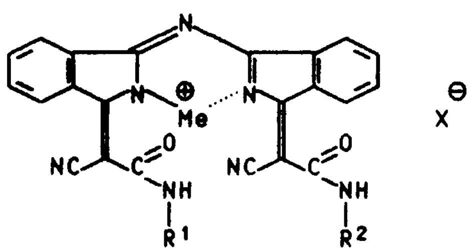

(I),

in der

| | |
|---|---|
| $R^1$ und $R^2$ | unabhängig voneinander für H, oder $C_1$- bis $C_4$-Alkyl, |
| $X^\ominus$ | für ein Äquivalent eines Anions und |
| Me | für $Zn^{2+}$, $Ni^{2+}$, $Co^{2+}$ oder $Cu^{2+}$ |

stehen.

Die Komplexe (I) geben in Lacken, Kunststoffen und Druckfarben je nach dem Metallatom brillantrote, blauviolette bzw. braune Färbungen mit guten bis sehr guten Echtheiten.

So ist z. B. der Zinkkomplex von (I) mit $R^1 = R^2 = H$ und $X^\ominus = Cl^\ominus$ in Nitrocellulose enthaltenden Druckfarben dem C.I. Pigment Red 53:1; C.I. 15585:1 im Glanz, in der Farbstärke und der Lichtechtheit deutlich überlegen.

In (I) stehen $R^1$ und $R^2$ unabhängig voneinander für H oder $C_1$- bis $C_4$-Alkyl. Für $R^1$ und $R^2$ sind Wasserstoff und Methyl bevorzugt. Von den genannten Metallionen ist $Zn^{2\oplus}$ bevorzugt, weshalb die entsprechenden Komplexe (I) ebenfalls bevorzugt sind. Als Anionen sind für $X^\ominus$ beispielsweise zu nennen: $Cl^\ominus$, $Br^\ominus$; $J^\ominus$; $Acetat^\ominus$; 1/2 $SO_4^{2\ominus}$; $NO_3^\ominus$, von denen $Cl^\ominus$ und $Br^\ominus$ bevorzugt sind.

Aufgrund der besonders guten anwendungstechnischen Eigenschaften sind Komplexe (I), in denen $R^1$ und $R^2$ für H oder $CH_3$, Me für $Zn^{2\oplus}$ und $X^\ominus$ für $Cl^\ominus$ stehen, besonders bevorzugt.

Zu den neuen Metallkomplexen der Formel (I) gelangt man, wenn man 2 Mol der Verbindung der Formel (III)

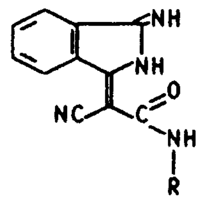

(III),

in der 3- bis 5-fachen Gewichtsmenge wasserfreiem N,N-Dimethylformamid (DMF), N-Methylpyrrolidon (NMP) oder Gemischen aus DMF und/oder NMP und $C_2$- bis $C_5$-Alkansäurem mit 1 Mol eines wasserfreien Metallsalzes der betreffenden Metallionen bei Temperaturen zwischen 50 und 150 °C umsetzt. Die Metallkomplexe fallen meist schon in der Hitze aus und können durch Abfiltrieren und Waschen mit organischen Lösungsmitteln in reiner Form isoliert werden.

Die Komplexe (I) mit Me = $Cu^{2\oplus}$, $Ni^{2\oplus}$ und $Co^{2\oplus}$ können auch erhalten werden durch Umsetzen des Zinkkomplexes (I) mit Cu-, Ni- oder Co-Salzen in Alkansäuren oder Gemischen aus Alkansäuren und DMF und/oder NMP. Vorzugsweise erfolgt dieser Metallionenaustausch in wasserfreier Essigsäure. Die Komplexe können in der Form wie sie bei der Synthese anfallen direkt als Pigmente verwendet werden.

Man kann die Pigmenteigenschaften der Komplexe noch durch bekannte Maßnahmen verändern und so für bestimmte Anwendungen in optimale Formen überführen. Dieses Ziel kann z. B. durch Mahlen der Rohpigmente, wobei die Pigmente in eine feinteilige Form überführt werden, und gegebenenfalls durch Nachbehandelung in geeigneten organischen Lösungsmitteln erreicht werden. Durch Variation von Lösungsmittel und/oder Temperatur kann die Pigmentform beeinflußt werden, so daß man farbstarke, transparente bis deckende Pigmente erhält.

Die Komplexe (I) sind Pigmente, die hervorragend zum Färben von Kunststoffen in der Masse, von Lacken und insbesondere von Druckfarben für den Papier-, Textil- und Blechdruck geeignet sind.

Die Erfindung soll durch die folgenden Beispiele zusätzlich erläutert werden. Die Teile sind Gewichtsteile. Die Prozentangaben beziehen sich auf das Gewicht.

Beispiel 1a)

170 Teile des Iminoisoindolins der Formel (III) R = H (0,8 Mol) und 60 Teile wasserfreies $ZnCl_2$ (0,44 Mol) werden in 700 Teilen wasserfreiem DMF eine Stunde bei 100 °C gerührt, wobei der Farbtonumschlag von gelb nach rot die fortschreitende Bildung des Komplexes anzeigt. Nach dem Abkühlen auf Raumtemperatur wird auf einer Nutsche abgesaugt, mit DMF und dann mit heißem Wasser gewaschen. Nach dem Trocknen erhält man 166 Teile (= 81 % d. Th.) eines gelbstichig roten Pigmentes der Formel (I) mit $R^1$ = $R^2$ = H; $X^\ominus$ = $Cl^\ominus$; Me = $Zn^{2\oplus}$.
Schmp.: > 340 °C
Analyse: $C_{22}H_{12}N_7O_2ZnCl$
ber.: C 52,0 %; H 2,3 %, N 19,3 %; O 6,3 %, Cl 6,9 %; Zn 12,8 %
gef.: C 52,0 %; H 2,5 %, N 19,2 %; O 6,9 %, Cl 6,6 %; Zn 12,3 %

Beispiel 1b)

Eine farbstarke, transparentere Pigmentform erhält man, wenn man das nach 1a) erhaltene Rohpigment in einer Kugelmühle 5 Stunden mahlt und dann anschließend das Mahlgut in der fünffachen Gewichtsmenge Eisessig 4 Stunden bei 110 °C rührt.

Beispiel 2

Ein Gemisch aus 150 Teilen DMF, 150 Teilen Eisessig und 90 Teilen Iminoisoindolin (III) mit R = $CH_3$ - (0,4 Mol) wird auf 60 °C erwärmt. Unter Rühren werden in vier Portionen 54 Teile $ZnBr_2$ wasserfrei (0,24 Mol) eingetragen. Es wird 2 Stunden bei 90 °C nachgerührt, filtriert, mit Eisessig und Wasser gewaschen und getrocknet. Ausbeute: 91 Teile (= 85 % d. Th.) eines neutral roten Pigments der Formel (I) mit $R^1$ = $R^2$ = $CH_3$; Me = $Zn^{2\oplus}$ und $X^\ominus$ = $Br^\ominus$.
Schmp.: > 340 °C Analyse: Zn ber: 11,3 %; Zn gef: 11,0 %

Beispiel 3

Es wird analog Beispiel 1 verfahren, jedoch verwendet man $CuSO_4$ anstellevon $ZnCl_2$. Ausbeute: 201 Teile eines rotstichigen braunen Pigments der Formel (I) mit $R^1$ = $R^2$ = H; Me = $Cu^{2\oplus}$ und X = 1/2 $SO_4^{2\ominus}$.
Analyse: Cu ber: 12,2 %; Cu gef: 12,1 %

Beispiel 4 (Ummetallisierung)

96 Teile des nach Beispiel 1a) erhaltenen Zinkkomplexes werden zusammen mit 40 Teilen Ni-Acetat wasserfrei und 900 Teilen Eisessig 3 Stunden auf 110 °C erhitzt. Nach dem Absaugen und Trocknen erhält man 88 Teile (= 89 %) eines rotvioletten Pigmentes der Formel (I) mit $R^1$ = $R^2$ = H; Me = $Ni^{2\oplus}$ und $X^{\ominus}$ = Acetat.
Schmp.: > 340 °C
Analyse: Ni ber: 11,2 %; Ni gef: 10,9 %

Beispiel 5 (Anionenaustausch)

10 Teile des nach 1a) erhaltenen Komplexes werden bei 60 °C 3 Stunden in wässriger Lösung von 3,4 Teilen Silbernitrat gerührt. Man saugt auf einer Nutsche ab, wäscht zuerst mit Ammoniakwasser, dann mit Wasser und trocknet. Ausbeute: 9 Teile eines gelbstichig roten Komplexes der Formel (I) mit $R^1$ = $R^2$ = H; Me = $Zn^{2\oplus}$ und $X^{\ominus}$ = $NO_3^{\ominus}$.
Schmp.: > 340 °C

Beispiel 6

Man verfährt analog Beispiel 2, ersetzt jedoch das $ZnBr_2$ durch die äquimolare Menge an $NiCl_2$. Der erhaltene Komplex (I) mit $R^1$ = $R^2$ = $CH_3$; Me = $Ni^{2\oplus}$ und $X^{\ominus}$ = $Cl^{\ominus}$ gibt im Lack blauviolette Färbungen.
Schmp.: > 340 °C
Analyse: Ni ber: 11,1 %; Ni gef: 10,8 %

Beispiele 7 bis 10

Entsprechend den Angaben in Beispiel 1a) wurden Komplexe der Formel (I) hergestellt. Die Bedeutung von $R^1$, $R^2$, Me und $X^{\ominus}$ ist in der folgenden Tabelle angegeben. In der rechten Spalte sind die in Lacken erhaltenen Farbtöne angegeben.

| Beispiel | $R^1$ = $R^1$ = | Me | $X^{\ominus}$ | Farbton | Schmp.: |
|---|---|---|---|---|---|
| 7 | $CH_3$ | $Zn^{2\oplus}$ | $Cl^{\ominus}$ | rot | > 340 °C |
| 8 | H | $Zn^{2\oplus}$ | $Br^{\ominus}$ | gelbstichig rot | > 340 °C |
| 9 | $CH_3$ | $Cu^{2\oplus}$ | 1/2 $SO_4^{2\ominus}$ | rotstichig braun | |
| 10 | H | $Co^{2\oplus}$ | $Cl^{\ominus}$ | rotviolett | 340 °C |

Anwendungsbeispiel 1 (Lack)

10 Teile des nach Beispiel 4 erhaltenen Pigments und 95 Teile einer Einbrennlackmischung, die 70 % Kokosalkyldharze (60 %ig in Xylol gelöst) und 30 % Melaminharz (ungefähr 55 %ig gelöst in Butanol/Xylol) enthält, werden in einem Attritor angerieben. Nach dem Auftragen, Ablüften und Einbrennen (30 Minuten bei 120 °C) erhält man rotstichig schwarze Volltonlackierungen mit guter Licht- und Überspritzechtheit. Durch Zumischen von Titandioxid werden rotviolette Weißverschnittfärbungen mit guten Licht-, Überlackier- und

Migrationsechtheiten erhalten.

Verwendet man die in den Beispielen 1 bis 3 und 5 bis 10 beschriebenen Pigmente, so werden Lackierungen in gelbstichig roten bis blauvioletten bzw. braunen Farbtönen und ähnlichen anwendungstechnischen Eigenschaften erhalten.

Anwendungsbeispiel 2 (Kunststoff)

0,5 Teile des nach Beispiel 2 erhaltenen Pigmentes werden auf 100 Teile Polystyrolgranulat (Standard-Marke) aufgetrommelt. Das angefärbte Granulat wird durch Extrudieren homogenisiert (190 bis 195 °C). Man erhält rote Extrudate, deren Färbung gute Lichtechtheit aufweist.

Verwendet man Mischungen aus 0,5 Teilen des oben genannten Pigmentes und 1 Teil Titandioxid, so erhält man ebenfalls rote Färbungen.

Anwendungsbeispiel 3 (Druckfarbe)

12 Teile des nach Beispiel 1b erhaltenen Pigmentes und 126 Teile einer Nitrocelluloselösung (17,6 Teile Nitrocellulose und 4,4 Teile Phthalsäuredibutylester in 25,2 Teilen Essigester und 78,8 Teilen Ethanol) werden in einem Dispergieraggregat innig vermischt. Man erhält eine NC-Tiefdruckfarbe, die rote farbstarke, sehr gut lichtechte Drucke liefert.

**Patentansprüche**

**1.** Isoindolin-Metallkomplexe der Formel I

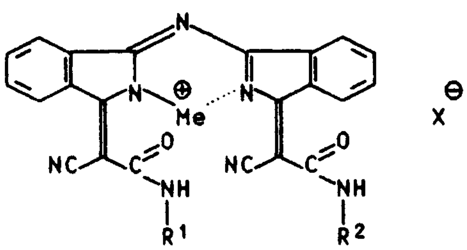

(I),

in der

| | |
|---|---|
| $R^1$ und $R^2$ | unabhängig voneinander für H oder $C_1$- bis $C_4$-Alkyl, |
| $X^\ominus$ | für ein Äquivalent eines Anions und |
| Me | für $Zn^{2+}$, $Ni^{2+}$, $Co^{2+}$ oder $Cu^{2+}$ |

stehen.

**2.** Metallkomplexe gemäß Anspruch 1, dadurch gekennzeichnet, daß $R^1$ und $R^2$ unabhängig voneinander für H oder $CH_3$ stehen.

**3.** Metallkomplexe gemäß Anspruch 1 oder 2, dadurch gekennzeichnet, daß Me für $Zn^{2+}$ steht.

**4.** Metallkomplexe gemäß Anspruch 1, 2 oder 3, dadurch gekennzeichnet, daß $X^\ominus$ für $Cl^\ominus$, $Br^\ominus$, $J^\ominus$, 1/2 $SO_4^{2-}$, Acetat$^\ominus$ oder $NO_3^\ominus$ steht.

**5.** Verfahren zur Herstellung des Metallkomplexes gemäß Anspruch 1, dadurch gekennzeichnet, daß man 2 Mol eines Iminoisoindolins der Formel

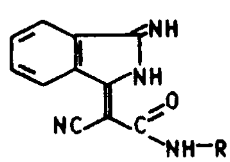

in Gegenwart von 1 Mol $MeX_2$ in wasserfreien, polaren aprotischen Lösungsmitteln, oder in Gemischen aus diesen Lösungsmitteln mit $C_2$-bis $C_5$-Alkansäuren in der Wärme umsetzt, wobei in den Formeln R, Me und $X^{\ominus}$ die in Anspruch 1 angegebene Bedeutung haben.

**6.** Verfahren gemäß Anspruch 5, dadurch gekennzeichnet, daß man als Lösungsmittel N,N-Dimethylformamid, N-Methylpyrrolidon, Gemische davon oder Gemische dieser Lösungsmittel mit $C_2$- bis $C_5$-Alkansäuren verwendet.

**7.** Verfahren gemäß Anspruch 5 oder 6, dadurch gekennzeichnet, daß man als Metallsalz $ZnCl_2$, $ZnBr_2$, $NiCl_2$ oder $CuSO_4$ verwendet.

**8.** Verwendung der Metall-Komplexe gemäß den Ansprüchen 1 bis 4 zum Pigmentieren von Lacken, Druckfarben und Kunststoffen in der Masse.

## Claims

**1.** An isoindoline metal complex of the formula I

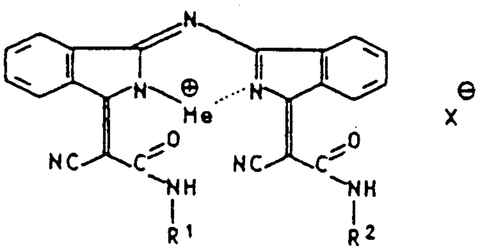

(I),

where $R^1$ and $R^2$ are independently of each other H or $C_1$-$C_4$-alkyl, $X^{\ominus}$ is one equivalent of an anion and Me is $Zn^{2+}$, $Ni^{2+}$, $Co^{2+}$ or $Cu^{2+}$.

**2.** A metal complex as claimed in claim 1, wherein $R^1$ and $R^2$ are independently of each other H or $CH_3$.

**3.** A metal complex as claimed in claim 1 or 2, wherein Me is $Zn^{2+}$.

**4.** A metal complex as claimed in claim 1, 2 or 3, wherein $X^{\ominus}$ is $Cl^{\ominus}$, $Br^{\ominus}$, $I^{\ominus}$, 1/2 $SO_4^{2-}$, acetate$^{\ominus}$ or $NO_3^{\ominus}$.

**5.** A process for preparing a metal complex as claimed in claim 1, which comprises reacting 2 moles of an iminoisoindoline of the formula

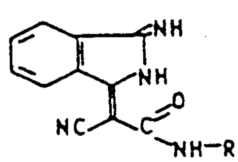

in the presence of one mole of $MeX_2$ in an anhydrous, polar aprotic solvent or in a mixture of such solvents with a $C_2$-$C_5$-alkanoic acid at elevated temperatures, in the formulae R, Me and $X^{\ominus}$ being as defined in claim 1.

**6.** A process as claimed in claim 5, wherein the solvent used is N,N-dimethylformamide, N-methylpyrrolidone, a mixture thereof or a mixture of such solvents with a $C_2$-$C_5$-alkanoic acid.

**7.** A process as claimed in claim 5 or 6, wherein the metal salt used is $ZnCl_2$, $ZnBr_2$, $NiCl_2$ or $CuSO_4$.

**8.** Use of a metal complex as claimed in any of claims 1 to 4 for pigmenting surface coatings, printing inks and plastics in the mass.

## Revendications

1. Complexes métalliques d'isoindoline de formule I

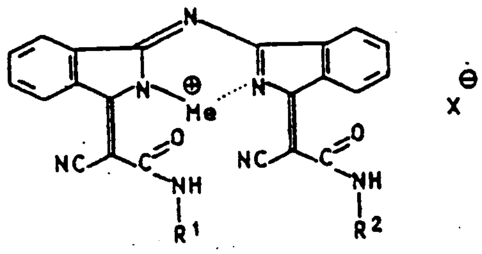

(I)

dans laquelle

| | |
|---|---|
| $R^1$ et $R^2$ | sont mis chacun, indépendamment l'un de l'autre, pour un atome d'hydrogène ou pour un reste alkyle en $C_1$ à $C_4$, |
| $X^-$ | est mis pour un équivalent d'un anion et |
| Me | est mis pour $Zn^{2+}$, $Ni^{2+}$, $Co^{2+}$ ou $Cu^{2+}$. |

2. Complexes métalliques selon la revendication 1, caractérisés en ce que $R^1$ et $R^2$ sont mis chacun, indépendamment l'un de l'autre, pour H ou $CH_3$.

3. Complexes métalliques selon la revendication 1 ou 2, caractérisés en ce que Me est mis pour $Zn^{2+}$.

4. Complexes métalliques selon l'une quelconque des revendications 1 à 3, caractérisés en ce que $X^-$ est mis pour $Cl^-$ , $Br^-$ , $I^-$ , 1/2 $SO_4{}^{2-}$, acétate$^-$ ou $NO_3{}^-$.

5. Procédé de préparation du complexe métallique selon la revendication 1, caractérisé en ce qu'on fait réagir à la chaleur 2 moles d'une iminoisoindoline de formule

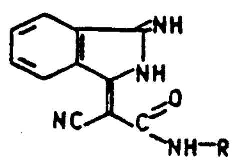

en présence de 1 mole de $MeX_2$ dans des solvants aprotiques polaires anhydres ou dans des mélanges de ces solvants avec des acides alcanoïques en $C_2$ à $C_5$, R, Me et $X^-$ dans les formules ayant les significations données dans la revendication 1.

6. Procédé selon la revendication 5, caractérisé en ce qu'on utilise, comme solvant, du N,N-diméthylformamide, de la N-méthylpyrrolidone, des mélanges de ceux-ci ou des mélanges de ces solvants avec des acides alcanoïques en $C_2$ à $C_5$.

7. Procédé selon la revendication 5 ou 6, caractérisé en ce qu'on utilise, comme sel métallique, $ZnCl_2$, $ZnBr_2$, $NiCl_2$ ou $CuSO_4$.

8. Utilisation des complexes métalliques selon l'une quelconque des revendications 1 à 4 pour la pigmentation de laques, d'encres d'imprimerie et de matières plastiques dans la masse.